# EUROPÄISCHE PATENTANMELDUNG

(11) **EP 4 745 905 A1**
(43) Veröffentlichungstag der Anmeldung: **20.05.2026**
(21) Anmeldenummer: 25217121.0
(22) Anmeldetag: 19.11.2025
(51) Int. Cl.: G06V 10/26, G06V 10/762, G06V 10/147, G06V 10/25, G06V 10/44, G06V 10/764, G06V 10/774, G06V 10/82, G06V 20/69

(54) **SYSTEM UND VERFAHREN ZUM ANALYSIEREN VON LUFTGETRAGENEN PARTIKELN**

(30) Priorität: 19.11.2024 DE 102024133938
(71) Anmelder: onsite.ai GmbH, 90513 Zirndorf (DE)
(72) Erfinder: DIPPOLD, Sebastian Samuel, 90513 Zirndorf (DE)
(74) Vertreter: Sonnenberg Harrison Partnerschaft mbB

(57) **Zusammenfassung**

Ein System zum Analysieren von luftgetragenen Partikeln ist offenbart. Das System umfasst ein Mikroskop (60) mit mindestens einem Objektträger (55), wobei der Objektträger (55) luftgetragene Partikel auf einer Objektträgeroberfläche (56) mit einer Haftschicht (59) aufweist und das Mikroskop (60) eine Bilderfassungskamera (68) zur Aufnahme von Bildern der luftgetragenen Partikel umfasst. Das Mikroskop (60) ist mit einem funktional gekoppelten Rechner (105) mit einem trainierten, bildbasierten KI-Modell (130) zur Auswertung der aufgenommenen Bilder gekoppelt, wobei die Auswertung eine biologisch-morphologische Klassifizierung der erfassten Partikel sowie Informationen über Art und Anzahl der Partikel liefert.

## Beschreibung

### Hintergrund der Erfindung

Die Sammlung und Analyse von luftgetragenen Partikeln, zum Beispiel Schimmelsporen, ist ein notwendiger Prozess zur Bewertung der Luftqualität in verschiedenen Branchen wie Bauwesen, Gesundheitswesen und Umweltüberwachung. Derzeit umfasst dieser Prozess die Einschaltung von Sachverständigen vor Ort, die die notwendige Ausrüstung und Materialien mitbringen, um Luftproben aus Gebäuden oder Räumen zu sammeln.

Gemäß etablierten Protokollen wie die Richtlinie VDI 4300 Blatt 10 und DIN ISO Norm Nr. 16000-19:2012) müssen mindestens 50 % der Oberfläche eines Raumes mit einem Gebläse angeblasen werden, um Partikel von Decke, Boden und Wänden aufzuwirbeln und somit zu mobilisieren. Dieser Schritt ist entscheidend, um sicherzustellen, dass die gesammelte Luftprobe repräsentativ für den gesamten Raum ist. Der Sachverständige (Benutzer) bewegt das Gebläse systematisch durch den Raum, um sicherzustellen, dass alle Bereiche des Raumes erreicht werden und keine Stellen ausgelassen werden.

Nach dem Anblasen der Oberflächen mit dem Gebläse folgt eine 10-minütige Ruhephase. Diese Ruhephase ermöglicht es den durch das Gebläse mobilisierten schweren Partikeln, sich teilweise abzusetzen und den leichteren Partikeln, sich gleichmäßig im Luftvolumen des Raumes zu verteilen (sogenannte "Luftpartikeln" oder "luftgetragenen Partikel), sodass sie anschließend beprobt werden können. Während dieser Zeit bereitet der Sachverständige die notwendige Ausrüstung für die Sammlung der Proben der luftgetragenen Partikel vor.

Als nächstes wird eine elektronische Vakuumpumpe verwendet, um die luftgetragenen Partikel aus der Luft auf präparierten Objektträgern für Mikroskope zu sammeln. Die Vakuumpumpe ist kalibriert, um ein vordefiniertes Luftvolumen einzusammeln, typischerweise zwischen 50 und 200 Litern, abhängig von den Anforderungen des Tests und dem vom Menschen wahrgenommenen Volumen der Partikel in der Luft. Die luftgetragenen Partikel werden mittels einer Schlitzdüse in einem Eingang des Probenahmesystems gezielt auf einen der Objektträger geleitet, wo die luftgetragenen Partikeln von einem dauerelastischen Klebefilm in Form eines Partikelstreifens eingefangen werden.

Typischerweise kann ein Objektträger bis zu drei Luftpartikelproben in Form dieser Partikelstreifen aufnehmen und pro zu untersuchenden Raum muss mindestens eine Probennahme durchgeführt werden. Für größere Räume oder Bereiche mit komplexen Geometrien können mehrere Probennahmen an vordefinierten Stellen erforderlich sein, um eine genaue Erfassung des Raumes zu gewährleisten. Der Sachverständige zeichnet sorgfältig den Ort und die Einzelheiten jeder Probennahme auf, um sicherzustellen, dass die Ergebnisse korrekt mit dem spezifischen zu testenden Bereich korreliert werden können. Diese manuelle Aufzeichnung der Einzelheiten und Umgebungsparameter durch den Sachverständigen birgt das Risiko für Übertragungsfehler oder Verwechslung von Daten, weshalb es vorkommen kann, dass die Luftpartikelproben nicht mehr richtig zugeordnet werden können oder die Berechnung der Werte pro Volumeneinheit aufgrund falscher oder fehlender Aufzeichnungen nicht korrekt durchgeführt werden kann.

Dieses Verfahren weist jedoch mehrere Nachteile auf. Nach der Probenentnahme werden die Proben per Post an ein stationäres Labor zur Analyse geschickt, weshalb es je nach Versandzeit und Laborauslastung mehrere Tage dauern kann bis Ergebnisse der Analyse der Laborauswertung vorliegen. Diese Verzögerung kann die Gesamtdauer der Bewertung der Luftqualität erheblich beeinträchtigen, was zu verzögerter Entscheidungsfindung und potenziellen Projektverzögerungen führt.

Darüber hinaus ist die manuelle Beurteilung durch Menschen im Labor fehleranfällig und typischerweise werden nur 10 bis 30 % der Partikelstreifen auf dem Objektträger hochauflösend bei 1000-facher Vergrößerung unter dem Mikroskop untersucht. Die darin gefundenen, klassifizierten und gezählten Partikel werden dann auf die gesamte Probe hochgerechnet, bevor auf einen Wert der Partikelkonzentration in der Luft pro Kubikmeter und Partikeltyp extrapoliert wird. Diese begrenzte Analysefläche kann zu ungenauen Ergebnissen führen, da die tatsächliche Vielfalt der in der Probe vorhandenen Partikel möglicherweise nicht vollständig repräsentiert ist.

Das manuelle Beurteilungsverfahren hat eine Toleranz von etwa 50 % auf das Analyseergebnis der Luftqualität, was zu erheblichen Ungenauigkeiten in den Analyseergebnissen führen kann. Wenn beispielsweise die tatsächliche Anzahl von Pilzsporen 1000 pro Kubikmeter beträgt, kann das gemeldete Ergebnis je nach Qualifikationsniveau des Labortechnikers und dem verwendeten spezifischen Analyseprotokoll zwischen 500 und 1500 Pilzsporen pro Kubikmeter liegen.

Darüber hinaus kann die gesamte Zeit von der Probennahme bis zum Erhalt der Analyseergebnissen aus dem Labor bis zu sieben Arbeitstage dauern. Diese verlängerte Bearbeitungsdauer kann zu erheblichen Verzögerungen bei der Entscheidungsfindung und dem Projektfortschritt führen, da die Stakeholder möglicherweise wochenlang warten müssen, bevor sie umsetzbare Ergebnisse erhalten.

Alarmierend ist, dass rund 30 % der Messungen der Sachverständigen auf der Baustelle eine Nachmessung erfordern, was neue Termine und zusätzliche Reisen für die Sachverständigen beinhaltet. Nachmessungen werden z.B. durch eine zu hohe Partikeldichte der luftgetragenen Partikel auf dem Objektträger oder durch eine nicht ausreichende Reinigung der Oberflächen des beprobten Raumes verursacht. Diese unzureichende Reinigung verursacht häufig ein entsprechendes Überschreiten der Grenzwerte für die Anzahl der relevanten Luftpartikel. Solche Nachmessungen erfordern erhebliche Ressourcen und können den gesamten Prozess um eine weitere Woche verlängern, was zu einer Gesamtdauer von etwa 14 Tagen mit potenziellen Fehlern von bis zu 50 % führt.

Der aktuelle Stand der Technik ist somit von Verzögerungen, Ungenauigkeiten und Ineffizienzen geprägt. Dieser Zeitrahmen und die Fehlermarge unterstreichen die Notwendigkeit einer effizienteren, genaueren und zuverlässigeren Methode zur Sammlung und Analyse von luftgetragenen Partikeln.

Die deutsche Patentanmeldung DE 10 2020 203290 offenbart ein Mikroskopie-Verfahren sowie eine Vorrichtung zur Untersuchung von Mikroskop-Proben. Die Mikroskop-Probe weist ein zu mikroskopierendes Objekt und einen das Objekt haltenden Probenträger auf. Das Objekt wurde gezielt präpariert z.B. fixiert und mit optischen Markierungen versehen. Um die Untersuchung, insbesondere die Identifikation von Mikroskop-Proben zu vereinfachen, ist die Vorrichtung (d.h. Mikroskop) ausgestaltet, eine digitale Identifikationskennung der Mikroskop-Probe durch ein KI-System (Fingerprinting der Mikroskop-Probe unter Verwendung wenigstens eines optischen Markers in wenigstens einem digitalen Abbild) zumindest eines Teils des Objekts zu berechnen. Mithilfe der digitalen Identifikationskennung kann die Mikroskop-Probe wiedererkannt werden. Die Bedienung der Vorrichtung (Mikroskop) setzt mikroskopische Fachkenntnisse voraus, z.B. Kenntnisse über Fokussierung, Belichtung, Präparation der Proben, Objektträgerausrichtung, usw. voraus. Ebenfalls muss das System in einer vibrationsarmen Laborumgebung betrieben werden, was ein mobiler Einsatz in z.B. Räumen zur Untersuchung der Luftqualität nicht ermöglicht.

Die deutsche Patentanmeldung Nr. DE 10 2017 009 804 betrifft ein Verfahren zur molekularen bzw. zellulären Charakterisierung von mikroskopischen biologischen Materialien und eine Vorrichtung zur Ausführung des Verfahrens. Das Verfahren umfasst die Schritte: Bereitstellen eines Trägers mit mikroskopischen Proben; Anordnen des Trägers auf einem Mikroskop-Tisch; Abbilden unter Vergrößerung eines Ausschnitts des Trägers mittels einer Digitalkamera und einer vergrößernden Optik. Der gleiche Ausschnitt wird mehrfach abgebildet und die Signalintensität von Fluoresenzkanälen erfasst, wobei während des Abbildens von aufeinanderfolgenden Abbildungen eine Fokusebene der Abbildungen verschoben wird. Eine kombinierte Abbildung wird aus den mehreren aufeinanderfolgenden Abbildungen erstellt und anschließend ausgewertet. Das Verfahren erfordert eine aufwändige Behandlung der Proben z.B. Fixieren und chemisches Einfärben der Proben und eine präzise Laborbehandlung und eignet sich daher nicht für den mobilen Einsatz.

Die internationale Patentanmeldung WO2021/061330 A1 offenbart ein Probenerfassungs- und Analysesystem zur Analyse von biologischen Proben in der Form von Aerosolen in einem Gasstrom. Das System umfasst eine frische Probenscheibe oder Substratladestation, die konfiguriert ist, um eine Kartusche aufzunehmen, die einen Stapel von frischen Scheiben aufweist. Das System hat auch eine Probenplatte oder Substratladestation, die konfiguriert ist, um eine Plattenkassette aufzunehmen, eine Probensammelstation und eine Analysestation, die ein TOFMS- (Time-of-Flight-Mass Spectrometry) System umfasst, wobei ein Probenplattenhalter konfiguriert ist, um sich horizontal und vertikal unter Verwendung von mindestens einem von einem Schrittmotor und einem Aktuator zu bewegen und mit jeder Station unter Verwendung einer vorbestimmten Analysesequenz zu koppeln, und wobei der Betrieb des Systems unter Verwendung eines Mikrocontrollers gesteuert wird.

Das System dieser Patenanmeldung basiert auf ein Massenspektrometrie-System (MALDI/LDI-MS) zur chemischen Analyse der Proben, d.h. Identifikation der Moleküle oder chemische Zusammensetzung. Das System erfordert geschultes Fachpersonal, da für jede Probe Prozessparameter manuell und separat konfiguriert werden (z.B. Laserintensität, Kalibrierung, Massenspektrum-Abgleich) und der Betrieb des Systems setzt eine spezialisierte Laborinfrastruktur z.B. mit Vakuumsystemen und einer gesonderten Sicherheitsumgebung voraus. Nach der Analyse sind die Proben zerstört und können nicht mehr aufbewahrt werden, sollte eine Wiederholung der Analyse erforderlich sein.

Die derzeitige, am häufigsten praktifizierte Methode, Objektträger zur manuellen Analyse an ein Labor zu versenden, bringt auch mehrere logistische Herausforderungen mit sich. Die Notwendigkeit wiederholter Messungen kann aufgrund zusätzlicher Reise- und Geräteeinrichtungsanforderungen zu erhöhten Kosten führen. Darüber hinaus kann die Abhängigkeit von herkömmlichen Postdiensten zum Versand von Proben dazu führen, dass Proben verloren gehen oder verlegt werden, was den Bewertungsprozess weiter erschwert. In vielen Fällen kann der gesamte Prozess von Anfang bis Ende bis zu 14 Tage dauern, wobei aufgrund menschlicher Interpretation und möglichem Datenverlust während des Transports eine erhebliche Fehlerquote besteht. Darüber hinaus erfordert der manuelle Prozess qualifiziertes Fachpersonal zur Identifikation luftgetragener Partikel, was zeitintensiv und kostspielig ist.

Zur manuellen Analyse werden die Proben derzeit mit einem Färbemittel, z. B. Methylenblau, eingefärbt. Diese Färbung sorgt dafür, dass organische Substanzen das Färbemittel annehmen und unter einem Mikroskop leichter zu erkennen sind. Alle manuellen Verfahren wenden derzeit diese Färbemethoden an. Die verwendeten Färbemittel sind meist krebserregend und daher gesundheitsschädlich. Es ist für den Fachmann nicht naheliegend, das Färbemittel wegzulassen, da sich sonst die biologischen Partikel von menschlichem Laborpersonal nicht oder nur sehr schwer von mineralischen Partikeln unterscheiden lassen. Deshalb ist es weltweiter Standard, solche Proben mit Färbemittel zu analysieren. Dies ist für die manuelle Analyse dieser Proben erforderlich, um einen effizienten und zeitlich nicht ausufernden Analyseprozess zu gewährleisten.

Alle bisherigen Verfahren zur mikroskopischen, bildbasierten Analyse dieser Feststoff-Luftpartikelproben erfordern ein Deckglas auf dem Objektträger. Dieses Deckglas wird auf die Probe der gesammelten luftgetragenen Partikel gelegt, damit das Färbemittel nicht verläuft und um eine gute optische Auflösung zu gewährleisten. Da die meisten derzeit verwendeten Objektive eine Deckglas-Korrektur haben, wären ohne Deckglas keine brauchbaren Bilder möglich. Da das Einfärben der Proben zur Unterscheidung organischer und anorganischer Partikel für das menschliche Auge unerlässlich ist und das Färbemittel durch das Deckglas fixiert wird, ist es ebenfalls nicht naheliegend, das Deckglas für die Analyse zu entfernen.

### Kurzfassung der Erfindung

Ziel der vorliegenden Erfindung ist es daher, ein automatisiertes und KIbasiertes Verfahren und System zum Analysieren von luftgetragenen Partikeln z.B. biologischen Luftpartikeln, vor Ort am Standort des Benutzers, nämlich im inneren von z.B. Gebäuden, Räumen, Lagerhallen, Kühlhäusern, Klimaanlagen, OP-Sälen oder Lebensmittelproduktionen, aber auch im Außenbereich an z.B. Kompostieranlagen oder einfach zur Außenluftanalyse von z.B. Pollen usw., bereitzustellen, das den Bedarf an manueller Laboranalyse und Versand von Proben minimiert und gleichzeitig die Gesamtzeit der Analyse von Anfang bis Ende verkürzt.

Das Verfahren und System verwenden ein eigenständiges Probeentnahmegerät, ein kompaktes Analysesystem und (in bestimmten Fällen) ein mobiles Gebläse zur Mobilisierung abgelagerten Staubs, die alle miteinander über eine bidirektionale Datenverbindung gekoppelt sein können, sodass Sensordaten der Probenahme (Ort, Luftvolumen, CO₂-Gehalt, Temperatur, Luftfeuchtigkeit, VOCs, MVOCs sowie weitere relevante Umgebungsparameter wie beispielsweise die Geschwindigkeit des Luftstroms zur Mobilisierung abgelagerten Staubs) in die KI-Auswertung der mikroskopischen bildbasierten Analyse einfließen. Dieses System und Verfahren ermöglichen Interoperabilität und Datenintegration, wodurch Sensordaten mit Analyseergebnissen in Korrelation gebracht werden können, und eine deutlich geringere Standardabweichung der Analyseergebnisse erzielt wird. Darüber hinaus können durch die Echtzeitüberwachung der Sensordaten Bedienfehler des Personals vermieden werden, da das Gerät dem Benutzer entsprechende Rückmeldungen gibt.

Als Luftpartikel bzw. luftgetragene Partikel sind u.a. Schimmelsporen, Pollen, Ruß, Tierhaare, tierische und menschliche Hautschuppen, Insektenbestandteile wie Hausstaubmilben oder deren Fragmente, mineralische Partikel wie Glasfasern und möglicherweise Asbestfasern, Mikroplastikpartikel und -fasern bekannt. Das System sollte in der Lage sein, alle erforderlichen Geräte und Materialien bereitzustellen, um die Partikelmobilisierung, Partikelsammlung und Partikelanalyse der Luftpartikeln vor Ort in einer einzigen Versandbox als Internet-of-Things (IoT)-Gerät durchzuführen, wobei ein automatisiertes mobiles Mikroskop mit KI-gestützten Analysefunktionen verwendet wird, wodurch die Genauigkeit und Effizienz der Analyse verbessert werden.

Durch das Verfahren und das System können auch die luftgetragenen Partikel identifiziert werden, die eine große Variabilität in ihren morphologischen und/oder biologischen Erscheinungsbildern aufweisen und innerhalb der Proben räumlich inhomogen verteilt sind.

Das Trainingsverfahren umfasst einen Datensatz mit einer Sammlung und Digitalisierung einer großen Anzahl von Bildern von sortenreinen Proben und/oder realen Proben aus verschiedenen Einrichtungen. Diese Bilder der Proben liefern einen umfassenden und repräsentativen Datensatz, der für die Entwicklung und das Training der neuronalen Netze verwendet wird.

Das Dokument offenbart ein System zum Analysieren von luftgetragenen Partikeln (Luftpartikeln) umfassend ein Mikroskop mit mindestens einem Objektträger, wobei der Objektträger die luftgetragenen Partikel auf einer Objektträger-Oberfläche aufweist. Das Mikroskop weist eine Bilderfassungskamera zur Aufnahme von Bildern der luftgetragenen Partikel auf und ist funktional gekoppelt mit einem Rechner mit dem trainierten, bildbasierten KI-Modell zur Auswertung der Bilder der luftgetragenen Partikel verbunden. Die Auswertung mittels des KI-Models liefert eine biologische-morphologische Klassifizierung der luftgetragenen Partikel sowie Information über Art und Anzahl der Partikel. In einigen Fällen können die von den Geräten (z.B. Probeentnahmegerät, mobiles Gebläse, Analysesystem) aufgezeichneten Sensordaten zur Bestimmung eines Korrekturfaktors herangezogen werden, mithilfe dessen sich die Messungenauigkeiten signifikant verringern lassen, wodurch die Analyseergebnisse eine geringere Standardabweichung aufweisen als die derzeitigen Methoden.

Das System setzt keine aufwändige vorherige Präparation der luftgetragenen Partikel voraus. Solche vorherigen Präparationen mit beispielsweise Färbemittel und Deckglas sind sonst üblich. Die luftgetragenen Partikel auf der Objektträgeroberfläche sind daher unbehandelt. Die Bilder der luftgetragenen Partikel werden in unbedecktem Zustand, d.h. ohne Deckglas aufgenommen.

Diese Auswertung kann vor Ort vorgenommen werden, da die Objektträger nicht zu einem Labor geschickt werden müssen. Darüber hinaus müssen die Proben auf dem Objektträger nicht gefärbt werden und es werden somit keine problematischen Chemikalien verwendet. Die Proben müssen auch nicht mit einem Deckglas abgedeckt werden, was die Optik in dem Mikroskop vereinfacht, da keine optischen Korrekturen auf Grund des Deckglases erforderlich sind. Die Auswertung erfolgt vollautomatisch und ermöglicht daher eine gute Reproduzierbarkeit der Angaben.

Die Objektträger bleiben durch das Weglassen von Färbemitteln und Deckgläsern unverändert im Originalzustand. Sie werden durch die Auswertung nicht beschädigt und können daher als Beweismittel aufbewahrt und können bei Bedarf erneut ausgewertet werden. Die derzeit übliche Methode des Färbens und Abdeckens mit einem Deckglas verändert die Probe, da die Färbemittel teilweise mit in den Partikeln enthaltenen Substanzen reagieren. Dies kann zu Blasenbildung und einer Veränderung der gesamten Struktur der Probe führen. Durch das Weglassen dieser Präparationsschritte kann dieser Effekt vollständig vermieden werden.

In einem Aspekt umfasst das System auch ein Gebläse zum Mobilisieren und Aufwirbeln von Staub von Oberflächen eines Raums. Die erfassten Luftpartikel stammen teilweise aus diesem aufgewirbelten Staub. Derzeitige Methoden zur Staubmobilisierung verwenden zwar ähnliche Gebläse, diese ähnlichen Gebläse sind jedoch nicht mit Sensorik ausgestattet. Dadurch kommt es häufig zu Fehlanwendungen, falscher Bedienung oder einer nicht ausreichenden Mobilisierung des abgelagerten Staubs. Das im Rahmen der Erfindung eingesetzte Gebläse verfügt über mehrere Sensoren zur Überwachung der korrekten Nutzung. Dazu gehören unteranderem Abstandssensoren, mit denen die Entfernung des Gebläses zur jeweiligen Oberfläche erfasst wird. Auf diese Weise kann eine vollständige und gleichmäßige Mobilisierung des Staubs sichergestellt werden. Zusätzlich kann der Benutzer z.B. durch optische, akustische oder haptische Rückmeldungen des Systems auf eine fehlerhafte Bedienung hingewiesen werden, um diese unmittelbar zu korrigieren. Ebenso können die erfassten Sensordaten zur Bestimmung von Korrekturwerten herangezogen werden, die in die Analyseergebnisse einfließen. Insgesamt führt dies zu einer deutlich höheren Standardisierung des Prozesses und zu einer geringeren Messungenauigkeit.

In einem weiteren Aspekt weist das System Umgebungssensoren zur Überwachung des Systems und der Mobilisierung der luftgetragenen Partikel auf. Die Daten der Umgebungssensoren werden zur Verbesserung der Auswertung der aufgenommen Bilder verwertet.

Das System weist in einem Aspekt ein Funksystem zur drahtlosen Übertragung von Daten vom im System integrierten Rechnern an externe Geräte, z.B. in der Cloud auf. Das System ist somit autark und nicht kabelverbunden für den Austausch von Daten, was die Tragbarkeit des Systems ermöglicht.

Das System umfasst ein Mikroskop und ein Probenahmesystem mit einer Vakuumpumpe zum Sammeln der luftgetragenen Partikel auf dem Objektträger.

Das System kann in einer Versand-/Verpackungsbox ausgeliefert werden.

Dieses Dokument offenbart auch ein Verfahren zum Analysieren von luftgetragenen Partikeln umfassend folgende Schritte: zunächst ein Aufbringen der Partikel auf eine Haftschicht einer Oberfläche und eine Aufnahme von Bildern der Partikel durch eine Bilderfassungskamera. Danach werden die Bilder durch ein trainiertes KI-Modell ausgewertet, wobei die Auswerteergebnissen eine sehr detaillierte morphologische-biologische Klassifizierung aufgrund von Form, Farbe, Farb- und Strukturübergängen, Helligkeit, Größe und vielem mehr umfassen. Das KI-Modell wurde mit Hilfe von Trainingsbildern von sortenreinen Proben und/oder realen Proben trainiert.

Das Verfahren umfasst in einem optionalen Aspekt eine Aufzeichnung von Umgebungsparametern während der Prozesse durch Sensoren und Verknüpfung der Aufzeichnungen der Umgebungsparamter mit den Auswerteergebnissen und Erstellung eines digitalen Schattens der Probe mit Messdaten. Durch die Zuordnung der Umgebungsparameter zu den jeweiligen Auswertergebnissen entsteht eine erweiterte Datengrundlage, die langfristige Vergleiche, Trendanalysen und Ursachenidentifikationen ermöglicht. Diese Zuordnung erlaubt insbesondere bei wiederkehrenden oder zeitlich versetzten Messungen eine nachvollziehbare Bewertung von Veränderungen der Probenqualität oder der Umgebungseinflüsse. Die Erfassung der Umgebungsparameter erhöht somit die Reproduzierbarkeit der Auswertungsergebnisse, beugt Fehlbedienungen durch Anwender vor und schafft ein ganzheitlicheres, digital abbildbares Modell der Messumgebung zum Zeitpunkt der Probenahme.

In einem Aspekt nimmt die Bilderfassungskamera Bilder der Partikel in mehreren Fokusebenen auf. Die Aufnahme von mehreren Fokusebenen liefert zusätzliche Informationen über die Luftpartikel, welche beim KI-Training und bei der Ausführung der KI die Erkennungswahrscheinlichkeit erhöhen.

Das Verfahren umfasst auch ein Anblasen von Oberflächen in einem Raum vor dem Aufbringen der Partikel auf der Oberflache.

Ein Verfahren zum Trainieren eine KI-Models zum Analysieren von luftgetragenen Partikeln ist auch in diesem Dokument offenbart. Das Verfahren umfasst ein

Hochladen von gekennzeichneten Bildern von sortenreinen Proben bzw. realen Proben und eine Durchführung eines Trainingsverfahrens mit Hilfe eines überwachten Lernverfahrens und ggf. eines unüberwachten Lernverfahrens mit Hilfe eines konvolutionalen neuronalen Netzwerks. In einem Aspekt wird eine Clusteranalyse der Bilder der realen Proben durchgeführt, um ähnliche oder identische Partikel zu erkennen.

Das Verfahren und das System eignen sich z.B. für den Einsatz in einem tragbaren System.

### Zeichnungen

Es zeigen:
Fig. 1A eine Übersicht über das System,
Fig. 1B eine Übersicht eines Mikroskops,
Fig. 1C eine Übersicht eines Probenahmesystems,
Fig. 1D eine Übersicht eines Gebläses
Fog 1E ein Beispiel eines Objektträgers,
Fig. 1F Einsatz des Systems in einem Raum,
Fig. 2 ein Flussdiagramm des Verfahrens,
Figs. 3A und 3B ein Flussdiagramm für das Trainieren des KI-Moduls,
Figs. 4A und 4B Bilder für Trainingszwecke,
Fig. 5 ein Flussdiagramm für das Training und Ausführung der KI-Modells auf Bildsequenzen.

### Detaillierte Beschreibung der Erfindung

Nachfolgend werden beispielhafte Ausführungsformen der Erfindung unter Bezugnahme auf die Zeichnungen beschrieben.

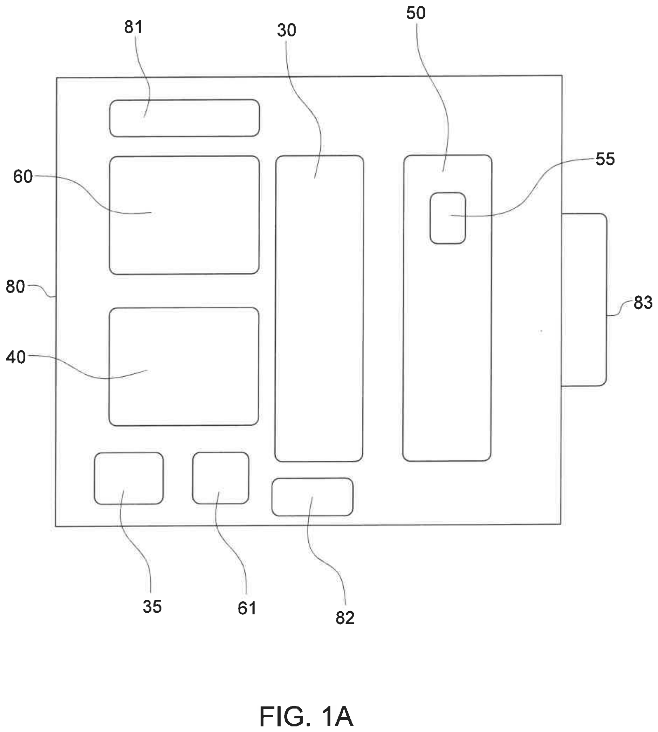

Die vorliegende Erfindung bezieht sich auf ein Verfahren und ein System 10 zum bildbasierten Analysieren der morphologischen-biologischen Eigenschaften wie Form, Farbe, Farb- und Strukturübergängen, Helligkeit, Größe, Kontras und vielem mehr von luftgetragenen Partikeln am Standort eines Benutzers, z.B. eines Sachverständigen und Baugutachters. Die Luftpartikeln umfassen u.a. Pilz- und Schimmelsporen, Pollen, Ruß, Tierhaare, tierische und menschliche Hautschuppen, Insektenbestandteile wie Hausstaubmilben oder deren Fragmente, mineralische Partikel wie Glasfasern und möglicherweise Asbestfasern, Mikroplastikpartikel und -fasern sowie sonstige Feinpartikel und sonstige organische und anorganische Stoffe. Das System 10 ist in Fig. 1A dargestellt und umfasst mehrere Hardware-Geräte und unterstützende Materialien, die eine Analyse der morphologischen und/oder biologischen Eigenschaften der luftgetragenen Partikeln ermöglichen. Die morphologische Analyse umfasst die Erkennung von morphologischen Merkmalen, z.B. Form, Farbe, Textur, Größe, Oberflächenstruktur usw.

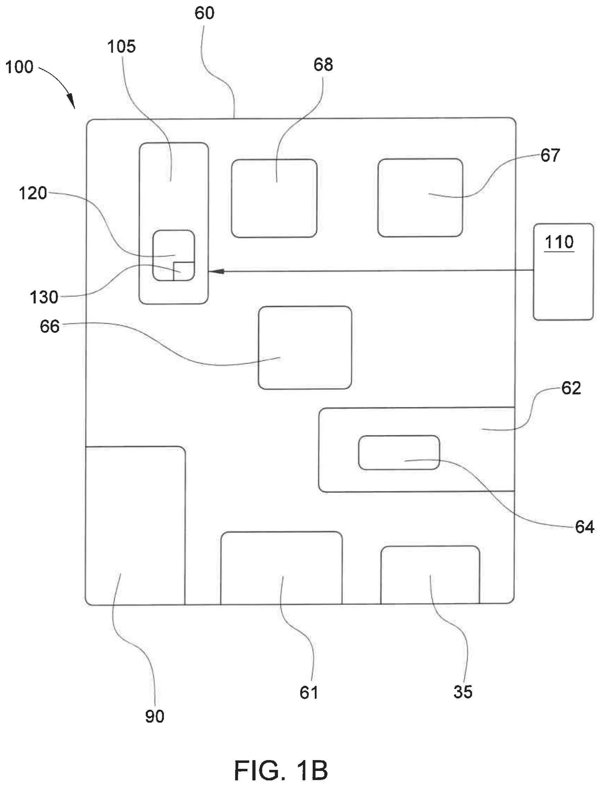

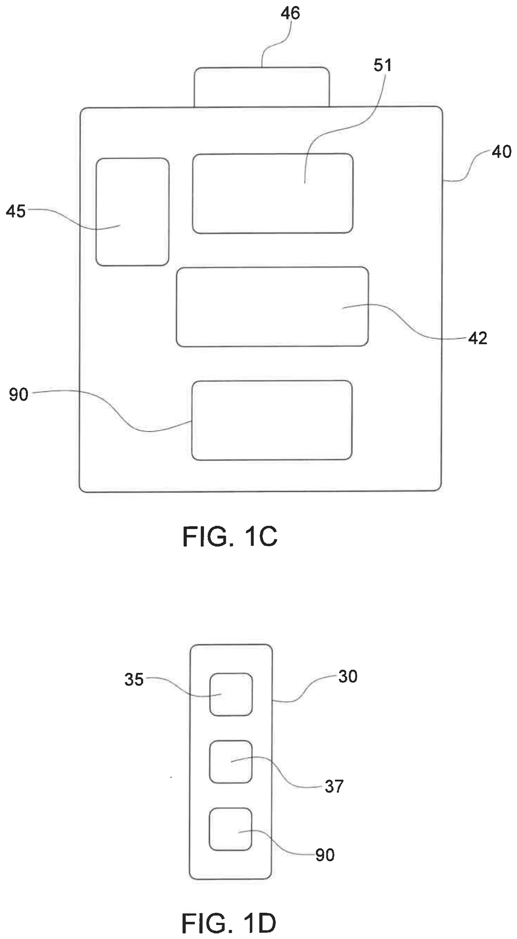

Das System 10 weist einen Gebläse 30 (Fig. 1D), ein Probenahmesystem 40 (Fig. 1C) mit einer Vakuumpumpe 42, ein Objektträgermagazin 50, ein Mikroskop 60 (Fig. 1B) und ein Analysesystem 100 (Fig. 1A) umfassend einen Rechner 105 mit KI-Modul 120 auf. Das in Fig. 1A dargestellte System 10 ist nur exemplarisch und kann anders ausgestaltet werden.

Das System 10 kann auch in einer Versand-/Verpackungsbox 80 umgesetzt werden. Diese Versand-/Verpackungsbox 80 dient als Grundeinheit und bündelt alle Einzelbestandteile des Systems 10. Die Versand-/Verpackungsbox 80 vereint alle beteiligten Geräte und Einzelteile des Systems 10 in einem handlichen, leicht transportierbaren Koffer. Die Versand-/Verpackungsbox 80 schützt die Geräte durch tiefgezogene Schaumstoffeinlagen während Transport und Versand. Die Versand-/Verpackungsbox 80 ist aus Aluminium, oder einem ähnlich robusten anderen Material gefertigt. In einem Aspekt ist sie mit einem ausziehbaren Griff und integrierten Rollen ausgestattet, sodass das Gesamtsystem als eine Einheit leicht transportiert werden kann. So stellt das System 10 ein mobiles und transportables Gesamtsystem zum mobilen Einsatz an jedem beliebigen Ort dar.

In einem Aspekt verfügt die Versand-/Verpackungsbox 80 über einen eingebauten, großen Akku, der als Powerbank 81 fungiert. Die Versand-/Verpackungsbox 80 kann ebenfalls über Steckkontakte zum Nachladen der Akkus der beteiligten Geräte oder zur unmittelbaren Versorgung der Geräte und Einzelteile des Systems mit Energie dienen. In einem Aspekt können die Geräte und Einzelteile per Induktion aufgeladen werden, sobald sie in der Box verstaut sind. Die Versand-/Verpackungsbox 80 hat ebenfalls einen Massenspeicher 82 zur Speicherung der Daten, ein integriertes Funksystem 61 zur Übertragung der Daten, und mehrere Umgebungssensoren 35 zur Überwachung der Umgebungsparameter. Die Funktion des Massenspeichers 82 und der verschiedenen Sensoren 35 wird später erläutert. Das integrierte Funksystem 61 (z. B. 5G, 6G, LoRaWAN oder ähnliche Systeme) übertragt die Daten an einen Cloud-Speicher. Darüber hinaus verfügt die einzelnen Geräte über ein kleines Funksystem (Bluetooth oder WLAN), um mit den anderen Geräten untereinander kommunizieren zu können. Das Funksystem 61 der Versandbox verfügt über ein stärkeres Funksystem, um über ein z.B. Mobilfunknetz mit einer Zentrale kommunizieren zu können.

Die eingebauten Umgebungssensoren 35 wie GPS-Tracker, Temperatur-, Feuchtigkeits- und Schocksensoren überwachen den Gerätezustand der innenliegenden Geräte sowie der Versand-/Verpackungsbox 80 während des Transports. Überwachungsdaten von den Umgebungssensoren 35 werden live oder in Intervallen an ein zentrales System zur Auswertung gesendet, sodass der Administrator oder ein entsprechender KI-Algorithmus zur Auswertung der Sensordaten jederzeit über das System und den Gerätezustand informiert ist. Dadurch können unvorhergesehene Veränderungen oder Schäden an dem System frühzeitig erkannt und wirtschaftliche, datengetriebene und vorbeugende Wartungsmaßnahmen ergriffen werden. Diese Datenerfassung sorgt für eine Verlängerung der Lebensdauer des Systems sowie für effizientere und ressourcenschonendere Wartungsintervalle.

In einem weiteren Aspekt ist die Versand-/Verpackungsbox 80 mit einem digitalen, ferngesteuerten E-Paper-Display 83 ausgestattet, das als Versandlabel fungiert. Das Display ermöglicht einen papierlosen und automatisierten Versandprozess, gesteuert durch einen Nutzer des Gerätes, einen Geräteadministrator oder einen entsprechenden KI-Algorithmus zur Optimierung von Versandrouten und sorgt somit für ein optimiertes Flottenmanagement vieler solcher Systeme in einem virtuell zusammengeschlossenen Analysenetzwerk.

Die Versand-/Verpackungsbox 80 kann in ein automatisiertes Flottenmanagement integriert werden, um als Teil eines mobilen, dynamischen Analysenetzwerks zu fungieren. Die Benutzer können die Systeme 10 über eine zentrale Website bestellen. Ein nicht benutztes System 10 wird dann automatisch an einen Benutzer in der Nähe geliefert. Das Flottenmanagement gewährleistet eine optimale Auslastung der Systeme 10, sodass die Systeme 10 häufig im Einsatz sind, selbst wenn einzelne der Benutzer die Systeme 10 nur selten benötigen. In anderen Wörtern fördert das System 10 mit der Versand-/Verpackungsbox 80 eine nachhaltige und zukunftsorientierte Sharing-Ökonomie, bei der sich viele der Benutzer die Systeme 10 teilen können, während die Funktionalität der Geräte jederzeit ermöglicht ist.

Das Gebläse 30 (Fig. 1D) ist leistungsstark und wird verwendet, um Staub von Oberflächen einer Decke 22, eines Bodens 24 und Wänden 26 eines Raums 20 sowie weiterer in dem Raum 20 befindlicher Gegenstände aufzuwirbeln und somit zu mobilisieren. Es handelt sich um ein batterie- 90 oder akkubetriebenes Gerät, das einem kleinen Laubbläser ähnelt, und ist mit einer Mehrzahl von Umgebungssensoren 35 ausgestattet. Die Umgebungssensoren 35 überwachen z.B. die korrekte Entfernung von der Oberfläche zum Anblasen der Oberflächen, und halten die Luftstromgeschwindigkeit innerhalb eines definierten Bereichs. In einem Aspekt weist der Gebläse 30 auch ein Überwachungssystem 37 auf, welches die Größe der angeblasenen Oberfläche misst, und stellt sicher, dass z.B. mindestens 50% der Oberflächenfläche des Raums 20 angeblasen wird. Dieses Überwachungssystem umfasst z.B. ein LIDAR-Gerät oder eine Kamera.

Mithilfe dieser Sensordaten und entsprechender Elektronikmodule kann dem Benutzer in Echtzeit eine optische, akustische oder haptische Rückmeldung über etwaige Fehler bei der Bedienung gegeben werden, sodass der Benutzer sofort darauf reagieren und sein Verhalten anpassen kann. Im Nachgang dazu werden die aufgezeichneten Sensordaten an das Analysesystem 100 mittels einer bidirektionalen Datenverbindung übermittelt. Diese Sensordaten können zur Bestimmung eines Korrekturfaktors der Ergebnisse der Bildverarbeitungs-KI, die im KI-Modul 120 ausgeführt wird, einfließen. Etwaig detektierte Fehler bei der Mobilisierung, der Probenahme oder dem Ablauf der verschiedenen Prozessschritte werden in die Analyseergebnisse einbezogen, wodurch eine wesentlich genauere Anzahl an beispielsweise Schimmelsporen pro Kubikmeter bestimmt werden kann als diese Berechnung ohne die datengetriebene Interaktion der drei Geräte - Probenahmesystem 40, Gebläse 30 und Mikroskops 60 - möglich wäre.

Diese Datenerfassung geht über den derzeitigen Stand der Technik hinaus, da bisher die meisten Umgebungsparameter mit separaten Messgeräten manuell durch den Benutzer erfasst und dokumentiert werden müssen. Hinzu kommt, dass solche manuell aufgezeichneten Umgebungsparameter oft lückenhaft und unvollständig sind oder die Benutzer bei deren Erfassung Fehler machen können. Außerdem werden die Werte bislang in keiner Weise in die Berechnung der in der Luft gefundenen Partikel einbezogen. Dies hat zur Folge, dass die derzeitigen Messunsicherheit bei dieser Art von Probennahmen und Analysen mit bis zu 50 % angegeben werden. Ringversuche zur Gesamtsporenauswertung mit Schlitzimpaktoren zeigen, dass bei Konzentrationen um 100 Sporen/m³ mit Messunsicherheiten von etwa ±50 % zu rechnen ist. (Ausgabe 4/2021 Der Bausachverständige, Seite 32, Artikel über die Auswertung des 13. Ringversuchs des VDB 2020, Schlussfolgerung).

Das Probenahmesystem 40 ist in Fig. 1C dargestellt und umfasst die Vakuumpumpe 42, eine Akku 90 und sammelt mobilisierte Partikel auf einem Objektträger 55 in der Objektträgeraufnahme 51 für das Mikroskop 60. Solche Probenahmesysteme 40 sind bekannt und z.B. von der Firma Holbach Umweltanalytik, Wadern, Deutschland, erhältlich. Die vorliegende Vorrichtung des Probenahmesystems 40 ist mit Pumpensensoren 45 ausgestattet, welche potenzielle Fehler des Bedieners oder Schäden sowie den Partikelfluss erkennen können, darüber hinaus zeichnen die Pumpsensoren Umgebungsparameter wie z.B. Feuchtigkeit, Temperatur und CO2-Gehalt der Luft sowie weitere Umgebungsparameter während der Messung als Metadaten auf. So können die vorerwähnten Übertragungsfehler der Daten durch manuelle Aufzeichnung vermieden werden. Das Probenahmesystem 40 verfügt in einem Aspekt außerdem über eine automatisierte und sensorüberwachte Konfiguration des Luftvolumens, damit werden Fehler seitens der Benutzer in der Konfiguration der Luftmenge für dem Objektträger 55 vermieden. Die Pumpensensoren 45 messen den Partikelfluss und die Konfiguration des eingesaugten Luftvolumens. Die Pumpensensoren 45 beenden die Probenahme automatisch, sobald auf dem Partikelstreifen des Objektträgers 55 eine für die automatisierte Auswertung durch das KI-Modul 120 optimale Partikeldichte erreicht ist. Das Probenahmesystem 40 verfügt auch über eine Schlitzdüse zum Lenken des eingehenden Luftstroms mit den luftgetragenen Partikeln auf die Objektträger 55.

Alle genannten Sensordaten können bei der Analyse mithilfe des Mikroskops 60 und des Analysesystems 100 zur Bestimmung des Korrekturwertes herangezogen und ausgewertet werden. Die Auswertung kann anschließend mit den Auswertungsergebnissen der Partikelzählung in Korrelation gebracht werden. Dadurch können beispielsweise gezählte Partikel einer oder mehrerer Klassen, bei denen sich die auswertenden KI-Algorithmen unsicher sind, ob es sich um den gesuchten Partikel handelt, in die Auswertungsergebnisse aufgenommen oder ausgeschlossen werden. Falls beispielsweise festgestellt wurde, dass zu wenig der vorhandenen Raumoberfläche mobilisiert wurde, kann diese Angaben über die (mangelnde) Mobilisierung wiederum als Korrekturfaktor das Ergebnis der gefundenen Partikel beeinflussen, indem der Wert der gezählten Partikel um einen Faktor von x % nach oben oder unten korrigiert wird. Die Höhe der Korrektur wird anhand historischer Ergebnisse und Erfahrungen automatisiert berechnet. Dies hat zur Folge, dass die Messgenauigkeit erhöht und die Standardabweichung im Vergleich zum Stand der Technik erheblich reduziert wird.

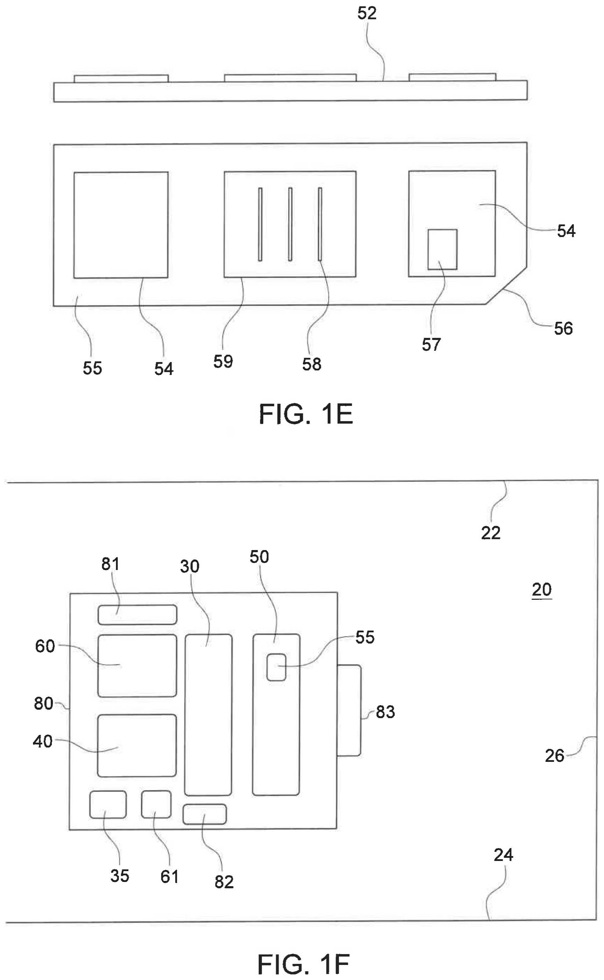

Die Objektträgeraufnahme 51 enthält während der Probennahme die Objektträger 55. Die Objektträger 55 haben Bereiche ihrer Objektträger-Oberfläche 52 mit Klebstoff in der Form eines Klebefläche 59 oder sonstige Haftschicht bedeckt, um die durch die Schlitzdüse 46 des Probenahmesystems 40 gelenkten Luftpartikel mittels Impaktion im Klebstoff als Partikelstreifen 58 zu fixieren, und die Objektträger 55 verfügen über einen einzigartigen Markierungscode 57. Z.B. eine DMC- oder QR-Code. Der mit Klebstoff bedeckte Bereich (Klebefläche 59) dient zum Auffangen der luftgetragenen Partikeln, die später vom Mikroskop 60 analysiert werden. Eine gesonderte Fixierung oder Präparierung der Proben ist nicht erforderlich. Der einzigartige Markierungscode 57 ermöglicht eine einfache Identifizierung und Verfolgung jedes Objektträgers 55, als auch die fehlerfreie Zuordnung der aufgezeichneten Sensordaten zu den jeweiligen Proben über alle Prozessschritte hinweg. Der Objektträger 55 ist in Fig. 1E dargestellt hat auch einen Positionierungsmarker 56 in der Form einer abgeschrägten Ecke, um den korrekten Sitz in der Objektträgeraufnahme 51 des Probenahmesystems 40 zu gewährleisten und ein falsches Einlegen des Objektträgers im Sinne eines Poka-Yoke-Systems zu verhindern. Der Positionierungsmarker 56 kann andere Formen aufweisen. Die eingesaugten Partikel treffen rechtwinklig mit hoher Geschwindigkeit auf der Kleberfläche 59 auf, tauchen durch Impaktion leicht in diese Klebefläche 59 ein und bleiben so an der Objektträger-Oberfläche 52 in Form des Partikelstreifens 58 befestigt.

Das Objektträgermagazin 50 umfasst ein Lager für viele Objektträger 55 (Fig. 1A und 1F), die ein Verbrauchsmaterial darstellen. Im Objektträgermagazin 50 wird die richtige und staubfreie Lagerung durch einen geschlossenen Behälter sichergestellt, und es wird automatisiert überwacht, ob noch genügend Objektträger 55 für die geplanten Messungen vorhanden sind. Im Zweifel wird automatisiert eine Bestellung im System ausgelöst und ein neues, voll beladenes Objektträgermagazin 50 an den Benutzer versendet.

Das Mikroskop 60 analysiert die gesammelten Partikel auf den Partikelstreifen 58 der Objektträger 55. Das Mikroskop 60 verfügt über eine elektrisch betriebene Schublade 62 zum Laden der Objektträger 55, einen XY-Tisch 64 zur Positionierung des Objektträgers 55 unter den Optiken 66 und zwei Arten von Kameras 67,68: eine Positionierungskamera 67 zur Positionierung des Objektträgers 55 und zum Erfassen des Markierungscodes sowie eine Bilderfassungskamera 68 für die Aufnahme von Bildern der Partikelstreifen 58. Das Mikroskop 60 scannt die Partikelstreifen und nimmt Bilder der Partikel auf den Partikelstreifen in verschiedenen Fokusebenen auf. In einem Aspekt handelt es sich um ein akkubetriebenes Mikroskop 60, das über einen Akku 90 verfügt. Darüber hinaus besitzt es zur Überwachung und zur Kommunikation ebenfalls ein Funksystem 61 sowie Umgebungssensoren 35. Das Mikroskop 60 hat eine U-förmige LED-Anordnung zur Beleuchtung des Objektträgers 55.

Das Mikroskop 60 ist tragbar ausgelegt, und in einem vollständig geschlossenen und staubdichten Gehäuse untergebracht. Das Mikroskop 60 kann somit ohne Demontage einzelner Komponenten manuell verlegt oder transportiert werden. Zur erleichterten Handhabung können Griffvorrichtungen oder Halteschlaufen vorgesehen sein. Die optische Einheit des Mikroskops 60 beinhaltet automatisiert angesteuerte Transportsicherungspositionen, in die das Gerät am Ende jedes Scans fährt. Das stellt während des Transports sicher, dass optische Komponenten in einer definierten Lage verbleiben, sodass nach dem Transport keine manuelle Neukalibrierung erforderlich ist. Optional kann das System eine Stromversorgungsoption (z. B. Akkubetrieb) aufweisen, um einen netzunabhängigen Betrieb zu ermöglichen.

Das Mikroskop 60 ist zur Reduktion externer Schwingungseinflüsse vibrationsgedämpft ausgeführt. Hierzu umfasst das System eine zweistufige Dämpfungsstruktur: Eine erste Dämpfungsebene besteht aus elastischen Gerätefüßen, die aus einem hochweich-elastischen Gummimaterial gefertigt sind und mechanische Schwingungen vom Aufstelluntergrund entkoppeln. Eine zweite Dämpfungsebene ist zwischen dem Gehäuse und der optischen Einheit angeordnet. Diese ist ebenfalls über weichelastische Gummipuffer elastisch gelagert, wodurch verbleibende Mikrovibrationen, die vom Gehäuse oder den integrierten Komponenten ausgehen, zusätzlich absorbiert werden. Durch die Kombination beider Dämpfungsebenen wird eine effektive Isolation der optischen Achse gegenüber mechanischen Störschwingungen erreicht, was die Stabilität und Reproduzierbarkeit der Bildaufnahme signifikant verbessert.

Der Rechner 105 kann entweder ein Cloud-Rechner mit lokaler Zugangseinheit oder lokaler Rechner sein und weist die üblichen Komponenten wie Prozessor, Speicher, sowie ein Künstliche Intelligenz (KI)-Modul 120 auf. Das KI-Modul 120 verwendet in einem Aspekt ein convolutional neural network (CNN) zur Klassifizierung und Zählung der Partikeltypen. Das KI-Modul 120 kann Partikelgruppierung, Klassifizierung und Erkennungsalgorithmen ausführen. Die Erstellung und das Lernverfahren (Training) des KI-Modell 130 erfolgt in der Cloud und wird später erläutert.

In einem Aspekt ist das Mikroskop 60 mit dem integrierten Funksystem 61 verbunden. Das Mikroskop 60 bietet eine drahtlose Konnektivität zu einer App auf einem mobilen Gerät (nicht dargestellt), die es den Benutzern ermöglicht, die Analyse zu starten und zu stoppen, Ergebnisse zu erhalten und Zertifikate für die Einhaltung von Vorschriften zu erhalten, falls die Ergebnisse alle Grenzwerte erfüllen. Darüber hinaus wird es über die App auch Empfehlungen zum weiteren Vorgehen geben können.

In einem alternativen Aspekt befindet sich eine Bedienerschnittstelle (z.B. Touch-Interface am Gehäuse oder als separates Element) Es wird eine Historie der vergangenen Messungen geben, und jeder Benutzer kann seine Daten darüber verwalten und anzeigen lassen. Evtl. wird es die Möglichkeit geben, weitere Services hinzu zubuchen. Solche Services umfassen u.a. Handlungsempfehlungen bei schlechten Ergebnissen oder Beauftragung eines Gutachters bzw. einer Sanierungsfirma zur Suche oder Behebung der Ursachen der schlechten Luftwerte. Das Funksystem 61 ist ebenfalls mit dem Analysesystem 100 verbunden. In einem Aspekt können die Daten vom Mikroskop 60 in dem Massenspeicher der Versand-/Verpackungsbox 80 geladen werden. Diese Speicherung ermöglicht es, einen internen Speicher des Mikroskops 60 zu leeren, um Platz für neue Probendaten zu schaffen. Das Funksystem 61 erlaubt die Übertragung der Probedaten an einen Cloud-Speicher.

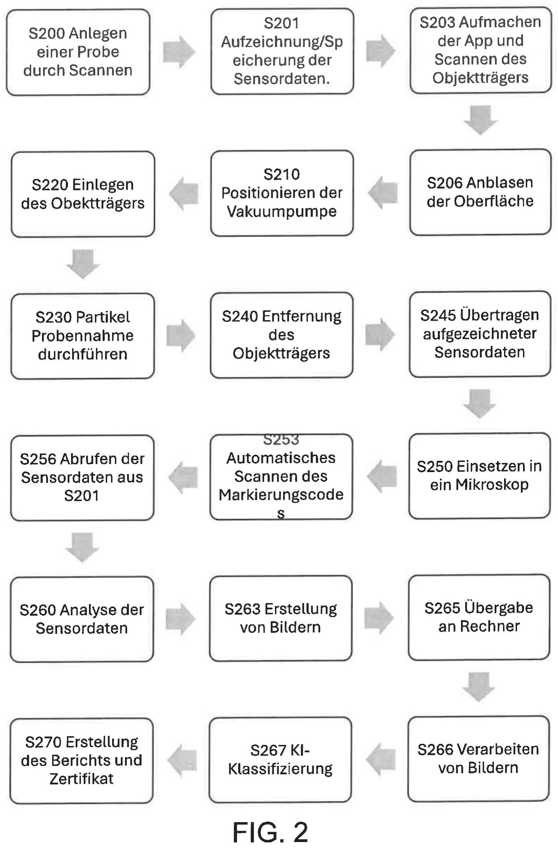

Das Verfahren wird jetzt anhand von Fig. 2 erläutert. In einem ersten Schritt S200 wird an einem virtuellen Messpunkt 27 in z.B. der Mitte eines Raumes eine Probe digital angelegt werden (dargestellt in Fig. 1F). Dieser Messpunkt 27 definiert die Position innerhalb des Raumes, an der die Probe der luftgetragenen Partikel entnommen werden soll. Im Schritt S201 werden Daten durch den Benutzer eingebeben und Sensordaten aufgezeichnet, welche Größe des Raumes, Standort des Raumes im Gebäude, Bezeichnung des Raumes, die Temperatur, den Luftdruck während der Messung usw. umfassen können. Gleichzeitig oder hintereinander wird im folgenden Schritt S203 mit der App auf dem Smartphon bzw. sonstigem Gerät der einzigartige Markierungscode des Objektträgers 55 gescannt. Die Angaben über die Probe, des Objektträgers 55 sowie die aufgezeichneten und aufzuzeichnenden Sensordaten an dem Messpunkt werden automatisiert im System angelegt.

Danach im Schritt S206 wird das Gebläse 30 verwendet, um die Oberfläche des Raums 20 anzublasen und die Partikel auf der Oberfläche aufzuwirbeln und somit als luftgetragene Partikel (Luftpartikel) zu mobilisieren. Das Anblasen und das Mobilisieren der Partikel dauern eine festgelegte Zeit, welche Abhängig von der Größe der zu messenden Oberflächen ist. Nach einer Wartezeit von ca.10 Minuten hat sich der Staub mit den schweren Luftpartikeln, welcher sonst zu unerwünschten Verunreinigungen führen würde, abgesetzt. Auch während dieses Vorgangs werden Sensordaten aufgezeichnet, diesmal allerdings von den Sensoren des Gebläses 30. Das Anblasen und das Mobilisieren der Partikel können auch vor dem Positionieren der Vakuumpumpe innerhalb des Raums durchgeführt werden.

Parallel oder anschließend dazu wird im Schritt S210 das Probenahmesystem 40 mit der integrierten Vakuumpumpe 42 in dem Raum positioniert.

Im folgenden Schritt S220 wird der Objektträger 55 in die Objektträgeraufnahme 51 des Probenahmesystems 40 eingelegt. Wie oben ausgeführt, verfügt die Objektträgeraufnahme 51 in einem Aspekt über ein Poka-Yoke-System, das verhindert, dass der Objektträger 55 mit der Kerbe also Positionierungsmarker 61 verkehrt, eingelegt werden kann. Ebenfalls verfügt das Probenahmesystem 40 in einem Aspekt über eine Schlitzdüse 46, die den Luftstrom auf die Klebefläche 59 auf dem Objektträger 55 im Schritt S230 lenkt.

Der Partikel-Probennahme-Schritt S230 wird in einem Aspekt mit einem vordefinierten Luftvolumen durchgeführt und ggf. mehrmals wiederholt, bis die Klebefläche, (bzw. die Haftschicht) auf dem Objektträger 55 optimal gefüllt ist. In einem anderen Aspekt wird über die eingebauten Pumpensensoren permanent die Partikelbelegung der Luftpartikel auf der Klebefläche überwacht. Das beprobte Luftvolumen wird automatisiert bei der für die maschinelle Auswertung (im Schritt S260) optimalen Partikeldichte der Luftpartikel auf dem Streifen abgebrochen und das bis zu diesem Zeitpunkt beprobte Luftvolumen wird in den Metadaten der Probe hinterlegt. Nach der Analyse werden die Daten für die Berechnung des Grenzwertes der Luftpartikeln pro Quadratmeter herangezogen. So wird sichergestellt, dass immer die optimale Partikeldichte der Luftpartikel im Partikelstreifen für die Analyse (Schritt S260) vorhanden ist, sodass weder zu wenige noch zu viele Luftpartikel auf der Probe vorhanden sind.

Diese Erfassung der Partikeldichte geht über den Stand der Technik hinaus, da bisher keine derart automatisierte Überwachung der optimalen Partikeldichte bekannt oder aus anderen Publikationen ersichtlich geplant ist. Dadurch wird es ermöglicht, Fehlmessungen aufgrund zu vieler Partikel auf dem Objektträger zu vermeiden, und es wird sichergestellt, dass sich nicht zu viele Partikel überlagern, was wiederum die Auswertung erschweren und zu erhöhten Messungenauigkeiten führen würde.

Der Objektträger 55 wird aus dem Probenahmesystem 40 im Schritt S240 herausgenommen und in das Mikroskop 60 im Schritt S250 eingesetzt. In einem Schritt S245 werden die aufgezeichneten Sensordaten an das Mikroskop übertragen. Die Proben auf dem Objektträger 55 müssen nicht gefärbt, mit einem Deckglas abgedeckt oder in sonstiger Weise aufgearbeitet werden. Das Mikroskop 60 scannt im Schritt S253 den einzigartigen Markierungscode der Probe und ruft im Schritt S255 automatisiert alle in den Schritten S201, S206, S210 und S230 aufgezeichneten Sensordaten als Metadaten ab, die zu dieser Probe / dem Messpunkt gehören. Diese Metadaten werden in den nachfolgenden Schritten S260 und S270 mit den Ergebnissen aus Schritt S267 in Korrelation gesetzt und tragen dazu bei, die Genauigkeit der Ergebnisse durch die oben beschriebenen Vorgehensweisen zu erhöhen.

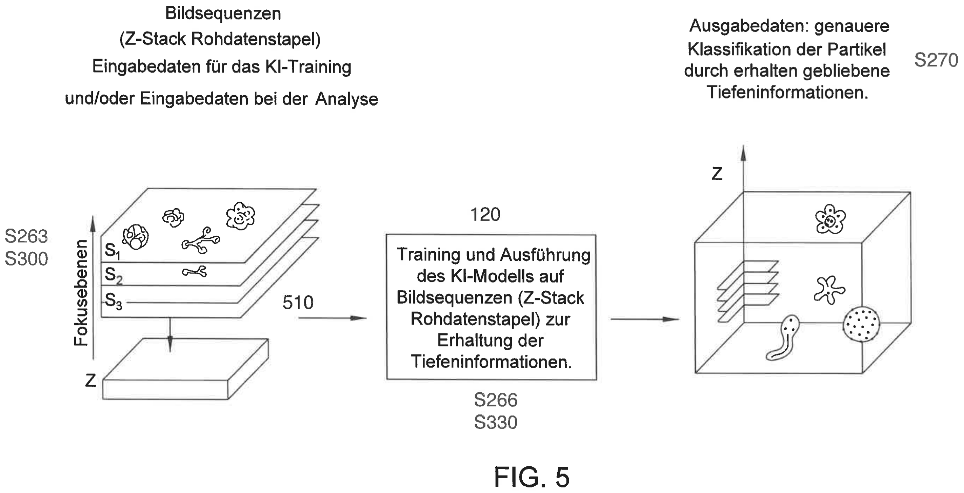

Die biologische Analyse und/oder die morphologische Analyse der Partikel wird im Schritt S260 durchgeführt und in Fig. 5 näher erläutert. Das Mikroskop 60 scannt optisch die Streifen auf dem Objektträger 55 und erstellt im Schritt S263 eine Bildsequenz 510 mit mehreren Bildern bei unterschiedlichen Fokusebenen, um einen sogenannten Fokus-Stack zu bilden. Diese Bildsequenz 510 wird an das Analysesystem 100 mit dem Rechner 105 mit KI-Modell 130 im Schritt S265 übergeben und im Schritt S266 verarbeitet. Der Rechner 105 wendet im Schritt S267 KI-Algorithmen zur morphologisch-biologischen Klassifizierung der Partikel an, zählt die Anzahl der Partikel Art pro Streifen und erstellt im Schritt S270 einen Auswertungsbericht und ggfs. ein Zertifikat.

Das Mikroskop 60 verfügt über eine elektrisch betriebene Schublade 62 zum Laden der Objektträger 55, so dass die Benutzer die Objektträger 55 einfach in das Mikroskop 60 einlegen und daraus entfernen können. Das Mikroskop 60 verfügt außerdem über einen XY-Tisch 64 zum Positionieren des Objektträgers unter der Optik, wodurch eine genaue Analyse der erfassten Partikel gewährleistet wird.

Das Mikroskop 60 ist mit zwei Arten von Kameras ausgestattet: eine erste Kamera zum Positionieren der Optik direkt über den Partikelstreifen bzw. den Proben auf den Objektträgern (Positionierungskamera 67) und eine andere Kamera zum Aufnehmen von Bildern der Partikelstreifen (Bildaufnahmekamera 68). Die Positionierungskamera 67 ermöglicht eine präzise Ausrichtung der Optik 66 über den Partikelstreifen, während die Bilderfassungskamera 68 hochauflösende Bilder in mehreren Fokusebenen der erfassten Partikel aufnimmt. Die Aufnahme von Bildern in mehreren Fokusebenen erfolgt voll automatisch und ermöglicht eine Klassifizierung und Zählung der Partikel in dem KI-Modell 130. Die Einstellungen wie relevante Fokusebenen, die Anzahl der auszuwertenden Fokusebenen, die Position und Größe des Scanningbereichs sowie weitere Scanparameter des Mikroskops können selbstständig durch Algorithmen vorgenommen werden.

Das mobile Mikroskop 60 scannt erfahrungsgemäß über 90-100 % der verwendeten Partikelstreifen in allen drei Dimensionen und nimmt Bilder an verschiedenen Fokuspositionen auf. So wird ein nahezu lückenloses digitales Abbild der Probe und der darauf befindlichen Partikel erstellt. Sollte der Objektträger 55 fehlerhaft sein oder unbrauchbare Proben erkennen, werden die Bilder nicht ausgewertet. Unbrauchbare Proben bzw. Objektträger erkennt man an einer ungleichmäßigen oder zu dichten Partikelverteilung, fehlendem Kontrast oder übermäßig heller bzw. dunkler Reflexion im Vergleich zu den erwarteten optimalen Werten. Diese Erkennung geschieht mit der Übersichtskamera. In jeder horizontalen Scanpositionen (YX-Position) wird ein vertikaler Bildstapel mit zum Beispiel 10 bis 120 vertikalen Z Fokuspositionen aufgenommen, wodurch eine umfassende und vollständige Analyse jedes Objektträgers / jeder Probe gewährleistet wird.

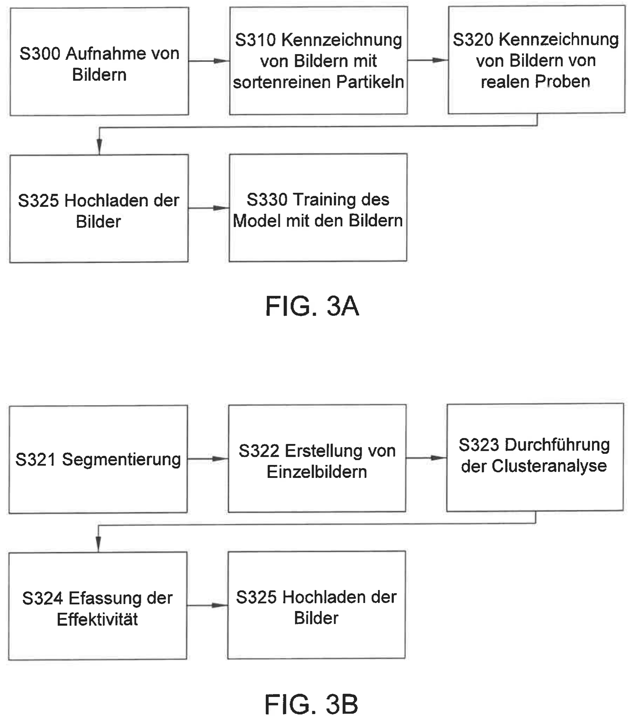

Das Trainieren des KI-Models 130 wird nun anhand von Fig. 3A und 3B erläutert. Das Trainings-System wird beispielsweise durch die Tryb-Plattform implementiert, wobei diese Implementierung nicht als einschränkend für die Erfindung anzusehen ist. TRYB ist eine maschinelle Lernplattform der Firma Isento aus Nürnberg, die sich auf motorisches und visuelles Training durch KI-gestütztes Lernen spezialisiert. Tryb bietet eine cloudbasierte Umgebung für die Entwicklung, Bereitstellung und Verwaltung von KI-Projekten.

Die Trainingsdaten 110 mit Bildern und Kennzeichnungen (Engl.: Labels) können in einem Aspekt in einem Schritt S325 in einem Docker-Container auf dem Rechner 100 in der Cloud bzw. lokal hochgeladen werden. Dort werden die Bilder mit den Kennzeichnungen durch das KI-Modul 120 anhand eines überwachten Lernverfahren (Engl.: Supervised Learning) mit z.B. dem Framework Keras im Schritt 330 erfasst. Das Ergebnis ist ein KI-Modell 130 in der Form z.B. eines YoloV8-Modells, welches für die Inferenz der Erkennung der Partikel verwendet wird. Diese Implementierung (Supervised Learning, Framework Keras und YoloV8-Modell) ist nicht als einschränkend für die Erfindung anzusehen, diese Implementierung kann beispielsweise auch durch unüberwachtes Lernen (engl.: unsupervised learning) durchgeführt werden.

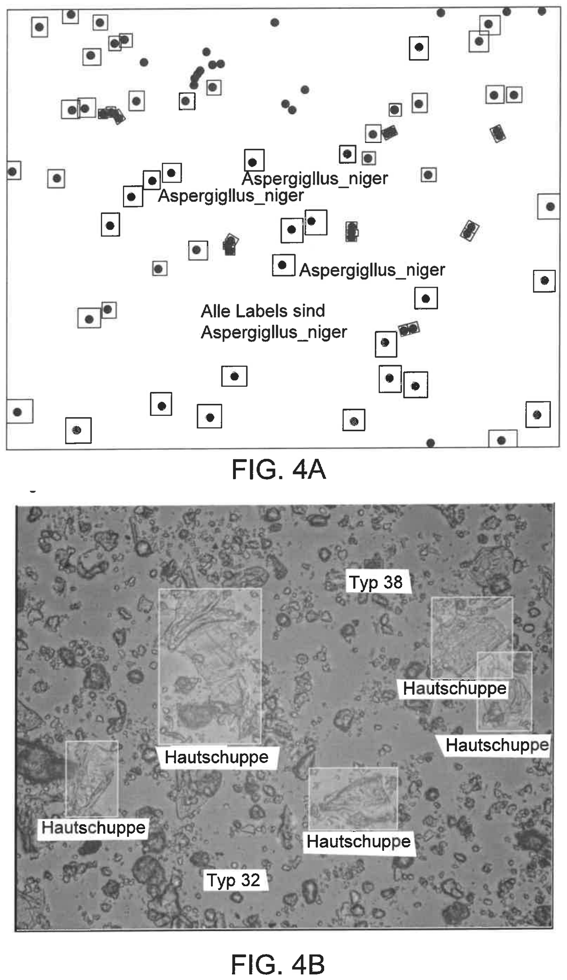

Die verwendeten Trainingsbilder 110 sind aufgenommene Bilder (Schritt 300) von sortenreinen Proben und Bilder von realen Proben. Fig. 4A zeigt ein Beispiel eines Bilds mit sortenreinen Proben (Aspergillus_niger). Die Bilder mit den sortenreinen Proben, welche in einem Labor unter kontrollierten Bedingungen entstanden sind, haben auf Grund der überwachten Wachstumsumgebung eine eindeutige Partikel-Zuordnung. Diese Bilder mit den sortenreinen Proben werden dementsprechend im Schritt S310 gekennzeichnet. Die Bilder von realen Proben werden zunächst erfasst und daraus Clusters von ähnlichen Partikeln gebildet. Fig. 4B zeigt ein Beispiel einer realen Probe mit unterschiedlichen Luftpartikeln. Diese Cluster werden von Fachexperten identifiziert und die Cluster korrekt im Schritt 320 gekennzeichnet. Es kann auch ohne Clustering eine Klassifizierung einzelner Partikel über einzelne manuell gesetzte Labels durchgeführt werden.

Bei der Anwendung dieses KI-Models 130 auf die neuen Mikroskop-Bilder liefert das KI-Modell 130 sowohl die Position der erkannten Partikel als auch deren Klassifikation, gewichtet mit einer Erkennungswahrscheinlichkeit.

Die Erfassung der Bilder von realen Proben im Schritt S320 ist weitgehend automatisiert, da eine manuelle Erfassung und Kennzeichnung der zahlreichen Bilder schwer möglich sind. Eine ergänzende manuelle Klassifizierung wird jedoch nicht ausgeschlossen, vielmehr kann sie in Kombination mit den nachfolgend beschriebenen Clustering-Vorgängen zu verbesserten Ergebnissen führen. Der erste Schritt S321 umfasst die Segmentierung der Partikel in den Bildern der realen Proben. Einzelbilder werden im Schritt S322 von den meisten Partikeln erzeugt und diese Einzelbilder werden zusammen mit der Position des Partikels in einem Datensatz gespeichert, um die spätere Kennzeichnung (Labelling) zu ermöglichen. Für diese Segmentierung werden zwei Ansätze parallel verfolgt: einerseits Standardalgorithmen der Bildbearbeitungsbibliothek OpenCV, die auf Kantenerkennung der Partikel basieren, und andererseits ein konvolutionales neurales Netzwerk (Eng: Convolutional Neural Network - CNN). Die Erkennungsrate dieser beiden Ansätze wird durch Qualitätssicherungsmaßnahmen evaluiert und verglichen.

Im nachfolgenden Schritt S323 erfolgt die Zuordnung der Einzelbilder zu den verschiedenen Partikeltypen durch eine Clusteranalyse. Für diese Analyse kommen unterschiedliche Cluster-Algorithmen zum Einsatz, wobei die folgende Auswahl nicht einschränkend für die Erfindung ist:
* K-Means: Ein weit verbreiteter Algorithmus, der eine vorgegebene Anzahl von Clustern verwendet.
* DBSCAN: Geeignet für unregelmäßige Formen und verrauschte Bilddaten.
* Mean Shift: Benötigt keine Vorgabe der Cluster-Anzahl, ist jedoch rechenintensiv.

Die Effektivität dieser Algorithmen wird anhand spezifischer Metriken bewertet, z.B. Silhouette Score, der Davies-Bouldin Index und der Adjusted Rand Index. Diese Metriken geben Aufschluss über unterschiedliche Aspekte bei der Beurteilung der Effektivität des Clusterings. Der Silhouette Score misst die Qualität der Clusterbildung, indem der Score das Verhältnis zwischen der mittleren Distanz der Datenpunkte innerhalb eines Clusters und der Distanz zum nächstgelegenen Cluster berechnet. Ein höherer Wert deutet auf gut getrennte und kompakte Cluster hin, was nützlich ist, wenn die Anzahl der Cluster variiert. Der Davies-Bouldin (DBI) Index bewertet die Clusterqualität durch das Verhältnis der intracluster-Distanzen zu den inter-cluster-Distanzen. Ein niedriger DBI-Index zeigt an, dass die Cluster kompakt und gut getrennt sind, was hilfreich für die gleichzeitige Bewertung von Kompaktheit und Trennung der Cluster ist. Der Adjusted Rand Index vergleicht die Übereinstimmung zwischen zwei Clusterzuweisungen, korrigiert Zufälligkeiten und bewertet, wie gut die Cluster mit einer bekannten "wahren" Struktur übereinstimmen. Dies ist besonders nützlich, wenn eine bekannte Grundwahrheit (Engl.: Ground Truth) verfügbar ist und man die Genauigkeit eines Clustering-Algorithmus direkt bewerten möchte.

Nach Abschluss der Segmentierung und Clusteranalyse steht eine qualitativ gesicherte Datenbasis für das Supervised Training des neuronalen Netzes zur Verfügung. Diese Datenbasis wird in Docket-Containern in die Cloud-Umgebung, das Trainingssystem im Schritt S325 hochgeladen.

Die Bearbeitung der Mikroskop-Bilder für Trainings- und Analysezwecke wird nun beschrieben. Grundlage für diese Bearbeitung ist die obengenannte, aus mehreren Fokusebenen erzeugte Bildsequenz (sogenannte "Focus Stack"). Dieser Fokus-Stack wird durch eine algorithmische Fusion zu einem hochauflösenden, durchgehend scharfen Gesamtbild kombiniert. Dabei können unterschiedliche Stacking-Logik eingesetzt werden (z. B. Laplace-, Wavelet- oder Deep-Focus-Fusion). Im vorliegenden Fall wird die Laplace-Fusion eingesetzt, wobei diese nicht limitierend der Erfindung ist. Diese Stacking-Logik erzeugt eine homogene Tiefenschärfe, die sämtliche Partikel unabhängig von ihrer Lageebene auf der Oberfläche des Objektträgers 55 vollständig abbildet. Das KI-Modell 130 wird auf diesen gestackten Bildern anschließend ausgeführt.

In einem optionalen Aspekt kann vor der Ausführung des KI-Modells 130 eine automatische Korrektur von Helligkeit, Weißabgleich, Kontrast, Schatten und Hintergrundrauschen erfolgen, um variierende Beleuchtungseinflüsse auszugleichen. Hierbei können beispielsweise Verfahren wie Contrast-Limited Adaptive Histogramm Equalization (CLAHE) oder Gaussian Background Subtraktion eingesetzt werden, um den dynamischen Kontrast in allen Bildbereichen zu harmonisieren.

Alternativ kann das neuronale Netz im KI-Modell 130 die Bildsequenz als Rohdaten direkt verarbeiten, wobei interne Normalisierungsschichten (z. B. Batch Normalization, Layer Normalization) die Variabilität der Eingabedaten ausgleichen.

Das KI-Modell 130 kann in unterschiedlichen Ausführungsformen realisiert sein:
Direkte CNN-Auswertung (End-to-End-Ansatz) - in dieser Variante werden die gestackten Bilddaten oder die Bildsequenz als Rohdaten unmittelbar einem trainierten neuronalen Netz zugeführt, z.B. einem Convolutional Neural Network (CNN) oder einem Vision-Transformer-Modell (ViT). Das Netz lernt die relevanten morphologischen und texturbasierten Merkmale implizit aus den Pixelwerten der gestackten Bilder. Dadurch wird eine direkte, datengetriebene Klassifikation der luftgetriebenen Partikel ermöglicht, ohne dass eine separate Merkmalsextraktion erforderlich ist.

Hybride Ausführungsform mit expliziter Merkmalsextraktion: Alternativ oder ergänzend kann vor der Klassifikation eine explizite Feature-Extraktion erfolgen.

Dabei werden aus den gestackten Mikroskop-Bildern geometrische, textur-, helligkeits- und farbbasierte Parameter berechnet, darunter beispielsweise:
- Morphologie: Form, Rundheit, Exzentrizität, Aspektverhältnis, Oberflächenstruktur
- Textur: lokale Entropie, Homogenität, GLCM-basierte Texturmuster
- Helligkeitsgradienten: Kantenintensität, Kantendichte, Richtungswinkel
- Farbverlauf: lokale Farbverteilungen in HSV- oder Lab-Farbräumen
- Kantenübergänge: Schärfegradient, Übergangsbreite, anisotrope Kantenstruktur
- Größenparameter: absolute und relative Fläche, Umfang, Verhältnis zu Nachbarobjekten
- Kontrastprofile: Mikrovariationen in Luminanz und Chrominanz

Diese Berechnung erfolgt wie folgt. Das jeweilige Partikel wird zunächst als binäre Maske isoliert (z. B. durch Schwellenwertbestimmung oder KI-basierte Segmentierung). Anschließend werden für jedes segmentierte Partikel mithilfe Bildverarbeitungsverfahren Merkmale wie Form, Textur, Kanten, Helligkeit oder Farbverteilung durch Gradienten- und statistische Analyseverfahren (z. B. GLCM, Sobel, Histogramm- oder Farbraumanalyse) automatisch berechnet. Dadurch entsteht ein numerischer Merkmalsvektor, der die charakteristischen Eigenschaften jedes Partikels beschreibt und der KI zur Klassifikation dient.

Diese Merkmale können anschließend mit den von der KI intern gelernten Repräsentationen kombiniert oder separat ausgewertet werden, um eine robuste und erklärbare Klassifikation zu erreichen.

Beide Varianten verfolgen dasselbe technische Ziel und unterscheiden sich jedoch in der Art, wie die morphologischen Informationen gewonnen werden - implizit durch datengetriebene Gewichtungen oder explizit durch definierte mathematische Merkmale

Segmentierung und Objektisolierung. Die Segmentierung erfolgt adaptiv, um überlappende oder zusammenhängende Partikel zuverlässig zu trennen.
Hierzu können U-Net-Architekturen, Mask R-CNN, YOLOv8-Segmentation, Watershed-Clustering oder das Segment Anything Model (SAM) eingesetzt werden.
Unsichere Regionen können durch probabilistische Maskierung (z. B. Monte-Carlo-Dropout) gekennzeichnet und durch Feedbackmechanismen nachbearbeitet werde

Clustering und Klassifikation. Nach der Vorverarbeitung werden die extrahierten oder implizit erlernten Merkmale in einen hochdimensionalen Merkmalsraum projiziert. Hierbei können Verfahren wie t-SNE, DBSCAN, HDBSCAN oder K-Means++ verwendet werden, um morphologisch ähnliche Strukturen zu gruppieren.

Die finale Klassifikation erfolgt vorzugsweise durch ein trainiertes neuronales Netz (z. B. ResNet, EfficientNet, Vision Transformer) oder durch alternative Modelle wie Support-Vector-Machines (SVM). Die Entscheidung basiert auf einer gewichteten Merkmalsfusion, bei der insbesondere morphologische und strukturelle Parameter stärker berücksichtigt werden als Farbmerkmale.

In Einem Aspekt kann das System über Cross-Domain-Learning an unterschiedliche Mikroskope, Sensoren und Beleuchtungsbedingungen angepasst werden.

Ergebnisfusion und Zuordnung. Für jedes erkannte Objekt erzeugt das KI-Modell 130 eine Wahrscheinlichkeitsverteilung (z. B. Softmax- oder Sigmoid-Ausgabe), die eine Zuordnung zu einer oder mehreren bekannten Partikelklassen beschreibt. Die Klassifikationsergebnisse können zusätzlich durch statistische Nachfilterung, Plausibilitätsprüfungen oder Vergleich mit historischen Daten optimiert werden. Dadurch wird eine reproduzierbare Klassifikation selbst bei minimalen optischen Unterschieden zwischen Partikeln ähnlicher Form erreicht.

Die Kombination aus gestackter Bildaufnahme und KI-gestützter Merkmalsanalyse im Rahmen eines tragbaren, vollautomatisierten Systems zur Analyse unbehandelter biologischer Partikel ist im aktuellen Stand der Technik nicht beschrieben und unterscheidet sich wesentlich von den bekannten stationären Labor- und Spektroskopiesystemen. In einem weiteren Aspekt kann die Analyse durch nicht fusionierte Fokusebenen erfolgen. In diesem Aspekt kann das KI-Modell 130 direkt auf die einzelnen Fokusebenen der aufgenommenen Fokusreihe angewendet werden, ohne dass zuvor eine Bildfusion zu einem scharfen Gesamtbild erfolgt.

Hierzu werden die einzelnen Rohaufnahmen eines Fokusstapels, die entlang der optischen Achse aufgenommen wurden, als mehrdimensionaler Datensatz (x, y, z) in das neuronale Netz eingespeist. Jede Fokusebene repräsentiert dabei eine definierte Tiefenposition innerhalb der Probe, sodass das KI-Modul 130 zusätzlich zur zweidimensionalen Morphologie auch räumliche Strukturinformationen aus der Abfolge der Ebenen ableiten kann. Durch diesen Aspekt wird der Abstand zwischen den Ebenen als zusätzliche Eingangsgröße berücksichtigt, wodurch sich eine virtuelle Tiefenkarte der Probe ergibt. Das KI-Modell 130 kann dadurch nicht nur Partikel in der Bildebene erkennen, sondern auch deren Höhenprofil, Reliefstruktur und Fokustiefe analysieren.

Das neuronale Netz im KI-Modell 130 kann dazu in unterschiedlichen Architekturen implementiert sein, beispielsweise als 3D-Convolutional Neural Network (3D-CNN), als rekurrentes Netz mit Fokusebenen-Sequenz (ConvLSTM) oder als Transformer-Modell mit axialer oder Cross-Slice-Attention, dass die Korrelationen zwischen Pixeln verschiedener Ebenen berücksichtigt. Dieser Aspekt erweitert die Analyse um eine dritte Dimension und ermöglicht eine verbesserte Klassifikation komplexer Partikelstrukturen auf Basis reiner optischer Bilddaten. Die Tiefeninformation, die in konventionellen Stacking-Verfahren typischerweise verloren geht, wird hier gezielt genutzt, um die Erkennungssicherheit und Robustheit der Klassifikation zu erhöhen.

Damit stellt die direkte Analyse der Fokusebenen eine technisch gleichwertige, jedoch funktional erweiterte Alternative zur Analyse des fusionierten Stack-Bildes dar. Beide Varianten beruhen auf derselben technischen Lehre - der KI-gestützten Klassifikation mikroskopischer Partikelbilder - unterscheiden sich jedoch in der Datenrepräsentation und Informationsdichte.

Im Gegensatz zu konventionellen Verfahren, bei denen die einzelnen Fokusebenen algorithmisch zu einem scharfen 2D-Bild kombiniert werden, wird in diesem Aspekt der vollständige, mehrdimensionale Datensatz einer Fokusreihe als Eingabe für ein neuronales Netz verwendet. Dadurch bleibt die Tiefeninformation zwischen den Ebenen erhalten, sodass die KI neben der 2D-Morphologie auch räumliche Strukturen und Höhenprofile der Partikel in die Klassifikation einbezieht.

Das Verfahren erhält als Eingabe die Bildsequenz aus mehreren Mikroskopaufnahmen, die entlang der optischen Achse (z-Richtung) aufgenommen wurden. Die Mikroskop-Bildern repräsentieren unterschiedliche Fokusebenen, wobei die Abstände zwischen den Fokusebenen bekannt oder kalibriert sind. Die Rohdaten werden nicht fusioniert oder nachgeschärft, sondern unverändert als dreidimensionaler Tensor (z. B. Dimensionen: Breite × Höhe × Ebenenanzahl) an das KI-Modul 120 übergeben.

Das neuronale Netz im KI-Modell 130 ist so konzipiert, dass es nicht nur Informationen innerhalb einer Bildebene, sondern auch Korrelationen zwischen den Bildebenen verarbeitet. Dazu kann es sich um eine der folgenden Architekturen handeln: 3D-Convolutional Neural Network (3D-CNN) - Faltet über drei Dimensionen (x, y, z) und erkennt Strukturen entlang der Tiefenachse.

Hybrid-Netz mit rekurrenten Schichten (ConvLSTM, ConvGRU) - Verarbeitet jede Ebene sequenziell und behält den Kontext zwischen den Aufnahmen bei.

Vision-Transformer mit axialer Aufmerksamkeitslogik (Axial Attention, Cross-Slice Attention) - Ermöglicht der KI, Pixelkontexte über Ebenen hinweg zu verknüpfen.

Diese Architektur erlaubt es der KI, Form, Relief, Partikelhöhe und fokale Tiefe zu erfassen und dadurch eine dreidimensional angereicherte morphologische Repräsentation zu erzeugen.

Das KI-Modell 130 wird mit annotierten Fokusstapeln trainiert, bei denen die Zielobjekte (z. B. Sporen, Fasern, Partikel) über mehrere Ebenen hinweg markiert sind. Durch die Auswertung von Fokusverlauf, Schärfegradient und Helligkeitsverteilung lernt das KI-Modell 130, welche Strukturen über die Ebenen hinweg konsistent bleiben und welche sich mit der Fokusebene verschieben. Somit kann das Netz die tiefenbezogene Strukturinformation als zusätzliches Klassifikationsmerkmal nutzen.

Das System ermittelt aus dem 3D-Bilder- Stack u. a. folgende Merkmalsgruppen:
- Fokustiefe und Lageprofil: -Schärfeverteilung eines Objekts über alle Ebenen
- Höhenstruktur: - Ableitung der relativen Partikelhöhe durch Analyse der Fokusebene mit maximaler Kantenschärfe
- Volumetrische Konsistenz: Zusammenhang zwischen Intensitäts- und Konturänderung über Ebenen
- Texturverlauf entlang der Tiefe: Veränderung von Muster, Helligkeit und Kontrast über dem Stack hinweg

Diese Merkmale werden intern zu einem 3D-Embedding verdichtet, das eine räumlich kohärente Objektbeschreibung ermöglicht.

Auf Basis des 3D-Embeddings klassifiziert die KI jedes Objekt nach Form, Höhe, Struktur und Reflexionsverhalten. Daraus können zusätzlich zu den bekannten 2D-Parametern auch Volumenmerkmale, Oberflächenrauigkeit und Höhenprofile berechnet werden.

Das Ergebnis kann sowohl in 2D-Darstellung (projizierte Ansicht) als auch in 3D-Visualisierung mit Tiefenkarte ausgegeben werden.

### Bezugszeichen

- 20: Raum
- 22: Decke
- 24: Boden
- 26: Wände
- 27: Messpunkt
- 30: Gebläse
- 35: Umgebungssensoren
- 37: Überwachungssystem
- 40: Probenentnahmesystem
- 42: Vakuumpumpe
- 45: Pumpensensoren
- 46: Schiltzdüse
- 50: Objektträgermagazin
- 51: Objektträgeraufnahme
- 52: Objektträge-Oberfläche
- 54: Papieraufkleber mit Beschriftungen
- 55: Objektträger
- 56: Positionierungsmarker.
- 57: Markierungscode
- 58: Partikelstreifen
- 59: Klebesstreifen
- 60: Mikroskop
- 61: Funksystem
- 62: Schubblade
- 64: XY-Tisch
- 66: Optiken
- 67: Positionierungskamera
- 68: Bilderfassungskamera
- 69: Mikroskopsensoren
- 80: IoT Versand-/Verpackungsbox
- 81: Akkupack/Powerbank
- 82: Massenspeicher,
- 83: digitales Versandlabel,
- 90: Akku
- 100: Analysesystem
- 105: Rechner (lokal oder in der Cloud)
- 110: Trainingsdaten
- 120: KI-Modul für überwachtes-Lernen (Supervised Learning)
- 130: KI-Model

## Patentansprüche

1. System zum Analysieren von luftgetragenen Partikeln, umfassend: ein Mikroskop (60) mit mindestens einem Objektträger (55), wobei der Objektträger (55) luftgetragene Partikel auf einer Objektträgeroberfläche (56) mit einer Haftschicht (59) aufweist und das Mikroskop (60) eine Bilderfassungskamera (68) zur Aufnahme von Bildern der luftgetragenen Partikel umfasst;
und einen mit dem Mikroskop (60) funktional gekoppelten Rechner (105) mit einem trainierten, bildbasierten KI-Modell (130) zur Auswertung der aufgenommenen Bilder, wobei die Auswertung eine biologisch-morphologische Klassifizierung der erfassten Partikel sowie Informationen über Art und Anzahl der Partikel liefert.

2. System nach Anspruch 1, wobei die luftgetragenen Partikel auf der Objektträgeroberfläche (56) unbehandelt sind.

3. System nach einem der vorhergehenden Ansprüche, wobei die Bilder der luftgetragenen Partikel in unbedecktem Zustand aufgenommen sind.

4. System nach Anspruch 1, wobei das KI-Modell (130) mit Hilfe von Trainingsbildern (110) von sortenreinen Proben und/oder realen Proben trainiert wurde, die eine biologisch-morphologische Klassifizierung umfassen.

5. System nach einem der vorhergehenden Ansprüche, weiter umfassend ein Gebläse (30) zum Mobilisieren von Staub von Oberflächen eines Raums (20).

6. System nach einem der vorhergehenden Ansprüche, weiter umfassend Umgebungssensoren zur Überwachung des Systems (10) und der Mobilisierung der luftgetragenen Partikel.

7. System nach einem der vorhergehenden Ansprüche, weiter umfassend ein Funksystem (61) zur drahtlosen Übertragung von Daten vom im System integrierten Rechner (105) an externe Geräte.

8. System nach einem der vorhergehenden Ansprüche, weiter umfassend ein Probenahmesystem (40) mit einem Gerät (42) zum Sammeln der Partikel auf dem Objektträger (55).

9. System nach einem der vorhergehenden Ansprüche, wobei der Objektträger (55) mit einer Positionierungsmarker (61) versehen ist.

10. Verfahren zum Analysieren von luftgetragenen Partikeln umfassend folgende Schritte:
- Aufbringen (S230) der Partikel auf einer Haftschicht (59) einer Oberfläche (56)
- Aufnahme (S263) von Bildern der luftgetragenen Partikel auf der Oberfläche (56) durch eine Bilderfassungskamera (68); und
- Auswertung (S267) der Bilder durch ein trainiertes KI-Modell (130) zur Erstellung von Auswerteergebnissen, wobei die Auswerteergebnissen eine morphologische-biologische Klassifizierung der luftgetragenen Partikel umfassen.

11. Verfahren nach Anspruch 10 weiter umfassend
- Aufzeichnung von Umgebungsparametern während der Prozesse durch Sensoren; und
- Verknüpfung der Aufzeichnungen der Umgebungsparameter mit den Auswertungsergebnissen und Erstellung eines digitalen Schattens der luftgetragenen Partikeln mit Messdaten.

12. Verfahren nach Anspruch 10 oder 11, wobei das KI-Modell (130) mit Hilfe von Trainingsbildern (110) von sortenreinen Proben und/oder realen Proben trainiert wurde.

13. Verfahren nach einem der Ansprüche 10 bis 12, wobei die Bilderfassungskamera (68) Bilder der luftgetragenen Partikel in mehreren Fokusebenen aufnimmt.

14. Verfahren nach einem der Ansprüche 10 bis 13, weiter umfassend ein Anblasen (S220) von Oberflächen in einem Raum (20) mit einem Gebläse vor dem Aufbringen (S200) der luftgetragenen Partikel auf der Oberflache (56).

15. Verfahren nach einem der Ansprüche 10 bis 14 weiter umfassend eine Aufzeichnung von Gerätedaten und Berücksichtigung der Gerätedaten bei den Auswertungsergebnissen.

16. Verfahren zum Trainieren eine KI-Models (130) zum Analysieren von luftgetragenen Partikeln umfassend:
- Hochladen (S325) von gekennzeichneten Bildern von sortenreinen Proben und/oder realen Proben, wobei die gekennzeichneten Bilder eine morphologische-biologische Klassifizierung der sortenreinen Proben und/oder realen Proben umfassen;
- Durchführung (S330) eines Trainingsverfahrens mit Hilfe eines überwachten und/oder unüberwachten Lernverfahrens mit Hilfe von z.B. eines konvolutionalen neuronalen Netzwerks, eines 3D-CNN oder eines Transformer-Modells, wobei das KI-Modell darauf trainiert wird, Unterschiede in Morphologie, Textur, Helligkeitsverteilung und Farbparametern zu erkennen und die Partikel entsprechend zu klassifizieren.

17. Verfahren nach Anspruch 16, weiter umfassend eine Durchführung (S323) einer Clusteranalyse der Bilder der realen Proben, um ähnliche oder identische Partikel zu erkennen.

18. Verfahren zum Trainieren eines KI-Modells (130) nach Anspruch 16 oder 17, wobei die gekennzeichneten Bilder Einzelaufnahmen eines Fokusstapels (Stack) verwendet werden, die dieselbe Probe in unterschiedlichen Fokusebenen darstellen.

19. Versand-/Verpackungsbox (80) zur Aufnahme und zum Transport des Systems nach einem der Ansprüche 1 bis 9 wobei der Versand/Verpackungsbox mit einer integrierten Sensoreinrichtung versehen ist, welche physikalische Parameter während des Transports erfasst, und wobei die Versand-/Verpackungsbox (80) über eine IoT-Kommunikationsschnittstelle zur Übermittlung der Daten an eine zentrale Überwachungs- oder Wartungseinrichtung verfügt.

20. Verwendung des Systems nach einem der Ansprüche 1-9 und/oder des Verfahrens nach einem der Ansprüchen 10-15 als tragbares System auf einer Baustelle, in einem Auto, oder in einem Büro.
